# EUROPÄISCHE PATENTSCHRIFT

(11) **EP 1 049 892 B1**
(45) Veröffentlichungstag und Bekanntmachung des Hinweises auf die Patenterteilung: **18.06.2003**
(21) Anmeldenummer: 98966408.1
(22) Anmeldetag: 22.12.1998
(51) Int. Cl.: F16K 1/52

(54) **MIT INTEGRIERTER STELLUNGSANZEIGE UND HUBBEGRENZUNG AUSGESTATTETE KAPPE FÜR DIE SPINDEL EINER ABSPERRARMATUR SOWIE VERFAHREN UND VORRICHTUNG ZU DEREN HERSTELLUNG**
CAP WITH INTEGRATED POSITION DISPLAY AND LIFT STOP FOR THE SPINDLE OF A SHUT-OFF DEVICE AND METHOD AND DEVICE FOR THE PRODUCTION THEREOF
CACHE EQUIPE D'UN INDICATEUR DE POSITION ET D'UN LIMITEUR DE COURSE INTEGRES POUR TIGE DE ROBINET D'ARRET, AINSI QUE PROCEDE ET DISPOSITIF POUR LEUR FABRICATION

(30) Priorität: 26.01.1998 DE 19802817
(43) Veröffentlichungstag der Anmeldung: 08.11.2000
(73) Patentinhaber: KSB Aktiengesellschaft, 67227 Frankenthal (DE)
(72) Erfinder: RUCKERT, Heinz-Jürgen, D-67259 Grossniedesheim (DE)
(86) Internationale Anmeldenummer: EP9808455
(87) Internationale Veröffentlichungsnummer: WO99037942

(56) Entgegenhaltungen:
- EP-A1- 0 387 634
- AT-B- 117 353

## Beschreibung

Gegenstand der Erfindung ist eine Kappe für eine Absperrarmatur, die auf dem Handrad der mit einer steigend bewegten Spindel ausgestatteten Absperrarmatur angeordnet ist, wobei die Kappe die über die Höhe des Handrades hinausbewegte Spindel umschließt und eine höhenverstellbar angeordnete Hubbegrenzung trägt, die durch eine mit ihrer gesamten axialen Erstreckung in die Kappe eintauchende, in einem in der Kappe angeordneten Innengewinde drehbare Stellschraube gebildet wird, wobei über seitlich in der Kappe angeordnete Fenster die Höheneinstellung der Spindel sichtbar ist.

Die auf dem Handrad angeordnete Kappe soll die austauchende Spindel der sich öffnenden Absperrarmatur vor Schmutz und Beschädigungen schützen. Die seitlich in der Kappe angeordneten Fenster ermöglichen es dem Bediener der Absperrarmatur, die Stellung des Absperrgliedes, die mit der Höhe der Spindel korrespondiert, zu erkennen.

Die in der Kappe angeordnete Hubbegrenzung besteht bei einer aus der EP 0 387 634 bekannten Ausführung aus einer Schraube, die mit innerhalb und außerhalb der Kappe angeordneten Muttern verbunden ist. Mit Hilfe der Muttern läßt sich die Länge des in die Kappe hineinragenden Teils der Schraube einstellen und nach erfolgter Einstellung die Position der Schraube sichern. Die in die Kappe hineinreichende Stirnseite der Schraube bildet danach einen Anschlag für die Stirnseite der Spindel, wodurch der maximal mögliche Öffnungshub des Verschlußstückes der Absperrarmatur festgelegt ist.

Diese Hubbegrenzung hat den Nachteil, daß die Schraube mit ihrem nicht genutzten Gewindeteil aus der Kappe herausragt. Hierdurch wird die Bauhöhe der mit einer solchen Kappe ausgestatteten Absperrarmatur erhöht. Im übrigen muß das herausragende Ende der Hubbegrenzung so gestaltet werden, daß keine Verletzungsgefahr von ihm ausgeht. Ein weiterer Nachteil besteht darin, daß die herausstehende Schraube beim Transport und bei eingebauter Absperrarmatur durch unvorsichtige Handhabung leicht verbogen werden kann.

Aus der US 4 714 233 ist auch schon ein Absperrschieber bekannt, der eine die Spindel umschließende Kappe mit Innengewinde besitzt. In dieses Innengewinde ist eine vollständig in die Kappe eintauchende Stellschraube höhenverstellbar eingesetzt. Über eine Öffnung auf dem von der Spindel abgewandten Ende der Kappe läßt sich die Stellschraube so positionieren, daß sie in einer gewünschten Höhe einen Anschlag für das obere Ende der steigenden Spindel bildet. Ein Nachteil dieser Lösung liegt darin begründet, daß die Kappe undurchsichtig ist und somit keine Sicht auf das Spindelende erlaubt. Die jeweilige Position zwischen der Schließstellung und der durch die Stellschraube vorgegebene Öffnungsstellung ist also außen nicht erkennbar.

Eine im wesentlichen wie die vorstehend beschriebene Lösung geartete Ausführung ist durch die DE 295 06 770 U bekannt. Letzere beschreibt im übrigen noch eine bisher nur in der Theorie bestehende Variante, bei welcher eine in die Kappe eingesetzte, die Stellschraube aufnehmende Gewindehülse aus durchsichtigem Material bestehen soll. Anzumerken ist, daß bei Einhaltung der Bedingung der Durchsichtigkeit die Gewindehülse relativ dünnwandig ausgeführt werden müßte. Damit würden aber die zur Verfügung stehenden Materialien durch einen im oberen Anschlag von der Spindel ausgeübten Druck über Gebühr beansprucht. Im übrigen wäre bei einer durchsichtigen Gewindehülse ein fortschreitendes Erblinden aufgrund der reibenden Beanspruchung des Innengewindes und der Verschmutzung zu befürchten.

Der Erfindung liegt die Aufgabe zugrunde, eine Kappe der eingangs genannten Art so zu gestalten, daß diese sowohl die Bedingung, die Stellung der Spindel in jeder Position erkennen zu lassen, als auch die Forderung nach einem stabilen, unempfindlichen Mechanismus erfüllt.

Die gestellte Aufgabe wird erfindungsgemäß dadurch gelöst, daß die Kappe zwei Fenster besitzt, die gegenüber der Längsachse der Kappe um einen solchen Betrag versetzt sind, daß jeweils einem Fenster ein geschlossener Wandteil der Kappe gegenüberliegt, so daß zwei senkrecht zur Ebene der Längsachse der Kappe verfahrbare Werkzeugbacken das der Einstellung der Stellschraube dienende Innengewinde in den Wandteilen herzustellen vermögen.

Eine derart gestaltete Kappe läßt sich symmetrisch zu einer gedachten Ebene, auf der die Längsachse der Kappe liegt, aufbauen. Ihr besonderer Vorteil liegt darin, daß sie in einem einfachen Verfahren aus Kunststoff gespritzt werden kann, wobei das Innengewinde durch zwei senkrecht zur Ebene der Längsachse der Kappe verfahrbare Backen gebildet wird, welche gleichzeitig als Fenster dienende Aussparungen herstellen. In diesem Spritzvorgang können auch ohne weiteres ein oberhalb des Innengewindes gelegener rohrförmiger Teil und ein unterhalb gelegenes Innengewinde zur Befestigung der Kappe auf einer die Spindel umschließenden Spindelmutter geformt werden.

Eine Vorrichtung zur Durchführung dieses Verfahrens wird vorteilhafterweise gebildet durch ein Spritzwerkzeug, welches besteht aus zwei den Körper der Kappe und die Innengewinde für die Stellschraube formende, horizontal verfahrbare Backen, einen vertikal einsetz- und herausnehmbaren Bolzen mit glatter Außenwand, der zusammen mit den Backen den oberhalb der Fenster gelegenen Bereich formt, und ein vertikal einsetzbares, nach dem Spritzvorgang herausschraubbares Teil, welches zusammen mit den Backen den unterhalb der Fenster gelegenen Bereich und das zur Befestigung der Kappe dienende Innengewinde bildet.

Bei Nutzung des aufgezeigten Verfahrens und des Werkzeuges ist die Kappe sehr kostengünstig herstellbar. Da die - in der Draufsicht sichtbaren - Querschnitte symmetrisch sind, kühlt das Spritzteil nach der Entformung gleichmäßig und ohne die Gefahr von Deformationen ab. Eine einbaufertige Kappe ist in einer kurzen Zykluszeit herstellbar.

Da sich bei der erfindungsgemäßen Kappe oberhalb der der Hubbegrenzung dienenden Stellschraube noch ein freier Raum ergibt, bietet sich die Möglichkeit, an dieser Stelle einen Verschlußstopfen anzuordnen, durch den die Stellschraube vor Schmutz und ungewollter Verstellung geschützt wird. Bei einer allein der Anzeige der Spindelposition dienenden Kappe, also bei nicht vorhandener Hubbegrenzung, schützt die Verschlußkappe die Spindel der Absperrarmatur. In beiden Einsatzfällen ist es für eine wenig aufwendige Kennzeichnung des jeweiligen Durchflußmediums von Vorteil, wenn der Verschlußstopfen in seiner Farbgebung dem Durchflußmedium angepaßt ist, oder wenn er mit Buchstaben, Ziffern oder andere Zeichen einen Hinweis auf die jeweilige Verwendung der Absperrarmatur gibt.

Anhand verschiedener Ausführungsbeispiele wird die Erfindung näher erläutert. Die Zeichnung zeigt in
- Fig. 1: eine Absperrarmatur, die eine auf das Handrad aufgesetzte Kappe mit einer Hubbegrenzung bekannter Art besitzt,
- Fig. 2: eine der Fig. 1 entsprechende Absperrarmatur mit einer erfindungsgemäßen Kappe mit Hubbegrenzung,
- Fig. 3: eine aus Kunststoff gespritzte Kappe der erfindungsgemäßen Art,
- Fig. 4: einen Längsschnitt durch die Kappe der Fig. 3,
- Fig. 5: einen Schnitt durch die Kappe der Fig. 3, der der in der Fig. 4 eingezeichneten Linie entspricht,
- Fig. 6: einen Längsschnitt durch ein Werkzeug, wie es zum Spritzgießen einer der Fig. 3 entsprechenden Kappe zu verwenden ist,
- Fig. 7: einen Schnitt durch das Werkzeug, der der in der Fig. 6 eingezeichneten Linie entspricht,
- Fig. 8: das Werkzeug der Fig. 6 in geöffnetem Zustand,
- Fig. 9: eine der Fig. 7 entsprechende Ansicht des geöffneten Werkzeugs.

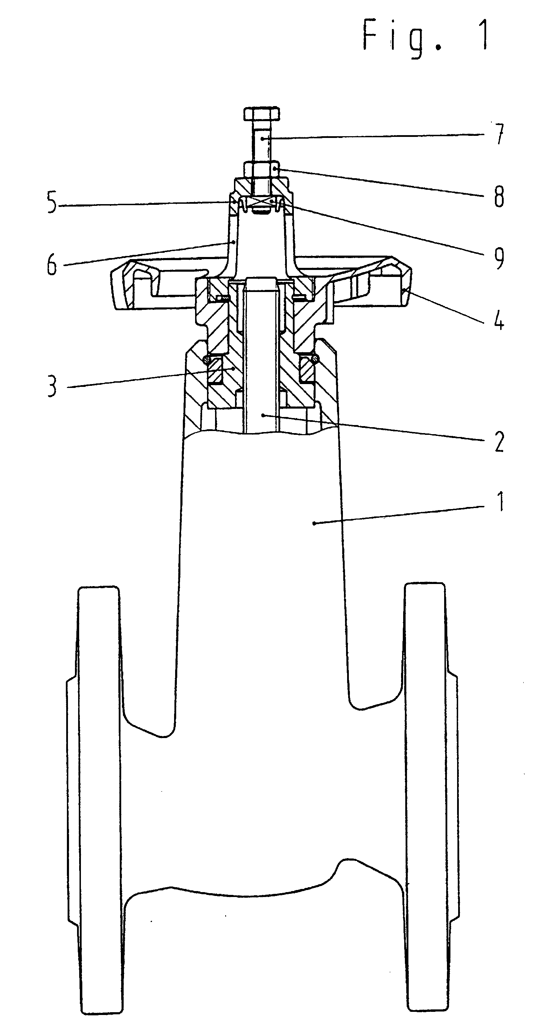

Die in der Fig. 1 dargestellte Absperrarmatur besitzt ein Gehäuse 1. Innerhalb des Gehäuses 1 wird ein Ventilsitz gebildet, der mit einem Verschlußstück zusammenwirkt (beide nicht dargestellt). Das Verschlußstück ist befestigt an einer mit einem Außengewinde versehenen Spindel 2, die ihrerseits in einer Spindelmutter 3 angeordnet ist. Die drehbar im Gehäuse 1 gelagerte Spindelmutter 3 trägt ein form schlüssig mit ihr verbundenes und auf ihr befestigtes Handrad 4. Bei Drehung des Handrades 4 wird über die Spindelmutter 3 eine Schraubkraft auf die Spindel 2 ausgeübt, wodurch die nicht drehende Spindel 2 je nach Bewegungsrichtung des Handrades 4 auf- oder abwärts bewegt wird. Dabei entspricht eine Aufwärtsbewegung der Spindel 2 einer in Öffnungsrichtung erfolgenden Anhebung des Verschlußstückes, während sich bei einer Abwärtsbewegung der Spindel 2 das Verschlußstück seinem Ventilsitz nähert und dort schließlich zur Auflage kommt.

Die jeweils von der Ventilspindel 2 eingenommene Stellung gibt somit Auskunft über die Stellung des Verschlußstückes in Bezug auf den Ventilsitz, also über den Öffnungsgrad der Absperrarmatur. Eine auf dem Handrad 4 angeordnete Kappe 5, die mit seitlichen Fenstern 6 versehen ist, vermittelt eine optische Erkennung der jeweiligen Verschlußstückstellung anhand des in den Fenstern 6 sichtbaren Endes der Spindel 2.

Die Oberseite der Kappe 5 trägt eine aus einer Schraube 7, einer Mutter 8 und einer Mutter 9 bestehende Hubbegrenzung. Die Schraube 7 bildet einen Anschlag für die Spindel 2, deren Stirnseite bei einer Aufwärtsbewegung an der Stirnseite der Schraube 7 zur Anlage zu bringen ist. Durch eine Höhenverstellung der Schraube 7 ist der Anschlag für die Spindel 2 und damit der maximal mögliche Öffnungshub des Verschlußstückes einstellbar. Die eingestellte Lage der Schraube 7 ist durch die Muttern 8 und 9, die gegeneinander gekontert werden, zu fixieren.

Da die Schraube 7, deren Länge durch den maximal möglichen Verstellweg bestimmt wird, weit über das obere Ende der Kappe 5 hinausragt, wird der vertikale Platzbedarf einer mit einer solchen Hubbegrenzung ausgestatteten Absperrarmatur erhöht. Die herausstehende Schraube ist im übrigen für Beschädigungen während des Transportes und im Einbauzustand anfällig. Sie selbst muß dabei aber so gestaltet sein, daß von ihr möglichst keine Verletzungsgefahr ausgeht.

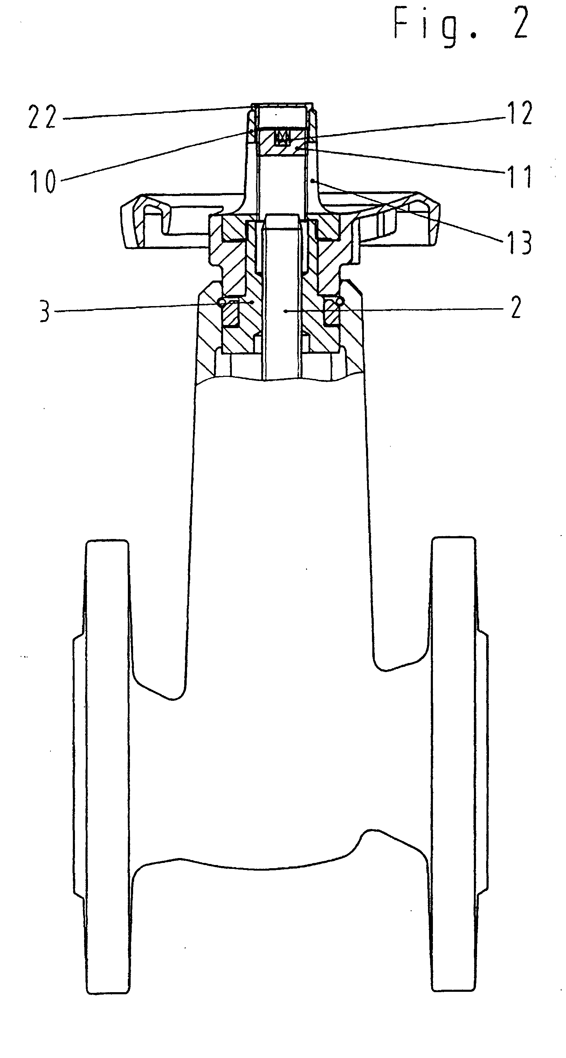

Die in der Fig. 2 dargestellte Absperrarmatur entspricht der Absperrarmatur der Fig. 1. Sie ist allerdings mit einer erfindungsgemäßen Kappe 10 ausgestattet, die eine vollständig in die Kappe 10 eintauchende Hubbegrenzung trägt. Diese Hubbegrenzung wird gebildet durch eine Stellschraube 11, die in einem in der Kappe 10 vorgesehenen Innengewinde angeordnet ist. Der Höheneinstellung der Stellschraube 11 dient ein in deren oberer Stirnseite angeordneter Innensechskant 12. Die untere Stirnseite der Stellschraube 11 bildet einen Anschlag für die Stirnseite der Spindel 2.

Auch die Kappe 10 besitzt seitlich angeordnete Fenster 13, über die die jeweilige Spindelstellung erkennbar ist.

In den oberhalb der Stellschraube 11 gelegenen freibleibenden Teil an der Innenseite der Kappe 10 kann nach der Einstellung der Hubbegrenzung ein Verschlußstopfen 22 eingesetzt werden, der die Verstelleinrichtung vor Schmutz und ungewollter Verstellung schützt. Durch seine Farbe und/oder auf ihm sichtbare Zeichen kann der Verschlußstopfen Hinweise, beispielsweise auf das Durchflußmedium, geben. Wegen seiner Schutz- und Kennzeichnungsfunktion ist der Verschlußstopfen allerdings auch bei solchen Kappen 10 einsetzbar, die keine durch eine Stellschraube 11 gebildete Hubbegrenzung besitzen.

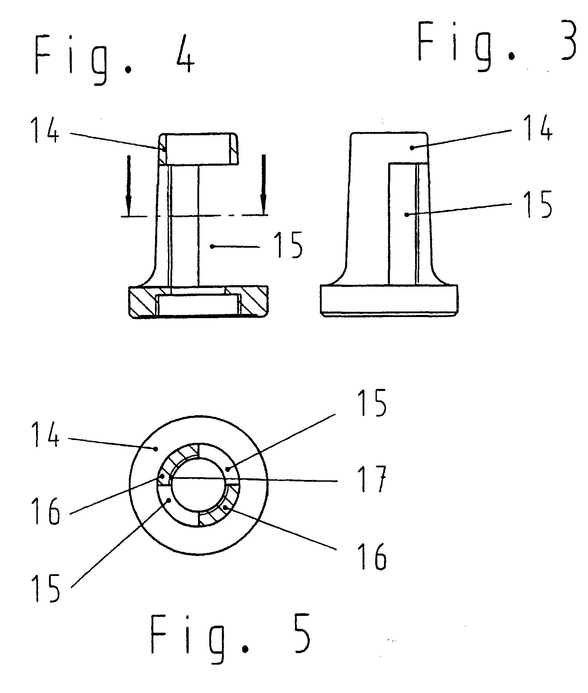

Die in den Fig. 3 bis 5 als Einzelheit dargestellte Kappe 14 stellt eine besonders vorteilhafte Ausführung des Erfindungsgegenstandes dar. Die Kappe 14 ist aufgrund ihrer besonderen Gestaltung mit Hilfe eines Spritzwerkzeuges vergleichsweise schnell und leicht aus Kunststoff herstellbar. Die in ihr angeordneten Fenster 15 sind gegenüber der Längsachse der Kappe 14 um einen solchen Betrag versetzt, daß jeweils einem Fenster 15 ein geschlossener Wandteil 16 der Kappe 14 gegenüberliegt. Die für die Aufnahme der Stellschraube 11 notwendigen Innengewinde 17 sind ausschließlich in den den Fenstern 15 gegenüberliegenden geschlossenen Wandteilen 16 angeordnet. Dies erlaubt eine problemlose, wenig aufwendige Herstellung des Innengewindes innerhalb eines Spritzwerkzeuges.

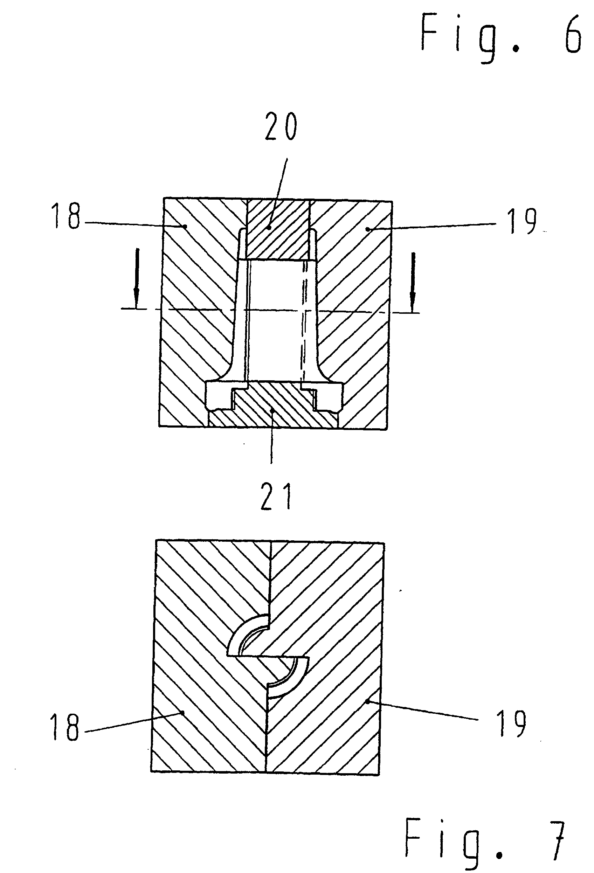

Das hier zu verwendende Spritzwerkzeug ist in den Fig. 6 und 7 dargestellt. Es besteht aus vier Teilen: zwei Backen 18 und 19, einem Bolzen 20 und einem Gewindeteil 21. Durch die horizontal verfahrbaren Backen 18 und 19 werden der Mittelkörper der Kappe 14 und die Innengewinde 17 erzeugt. Der Bolzen 20 formt zusammen mit den Backen 18 und 19 den oberhalb der Fenster 15 gelegenen Bereich der Kappe 14. Das vertikal einsetzbare, nach dem Spritzvorgang
herausschraubbare Gewindeteil 21 erzeugt zusammen mit den Backen 18, 19 den unterhalb der Fenster 15 gelegenen Bereich der Kappe 14 und ein zur Befestigung der Kappe 14 auf einer Spindelmutter 3 dienendes Innengewinde.

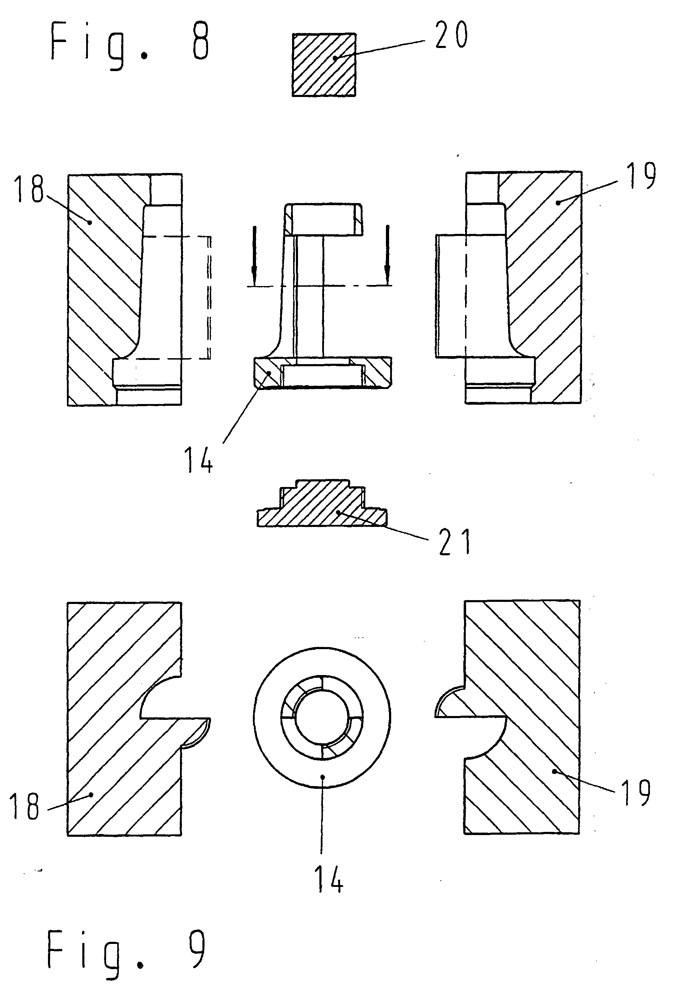

Die Fig. 8 und 9 zeigen die Kappe 14 und das zu deren Herstellung benutzte Spritzwerkzeug nach dem Herstellungsvorgang, wobei das Spritzwerkzeug in geöffnetem Zustand dargestellt ist. Diese Darstellung macht die wenig aufwendige und kostengünstige Herstellung der Kappe 14 noch einmal deutlich. In der in der Fig. 9 dargestellten Draufsicht ist im übrigen erkennbar, daß die Querschnitte symmetrisch sind. Dies führt dazu, daß die gespritzte Kappe 14 nach der Entformung gleichmäßig und beherrschbar abkühlen kann. Die nach dem Spritzvorgang einbaufertige Kappe 14 ist in einer kurzen Zykluszeit herstellbar.

## Patentansprüche

1. Kappe für eine Absperrarmatur, die auf dem Handrad einer mit einer steigend bewegten Spindel ausgestatteten Absperrarmatur angeordnet ist, wobei die Kappe die über die Höhe des Handrades hinausbewegte Spindel umschließt und eine höhenverstellbar angeordnete Hubbegrenzung trägt, die durch eine mit ihrer gesamten axialen Erstreckung in die Kappe eintauchende, in einem in der Kappe angeordneten Innengewinde drehbare Stellschraube gebildet wird, wobei über seitlich in der Kappe angeordnete Fenster die Höheneinstellung der Spindel sichtbar ist, **dadurch gekennzeichnet, daß** die Kappe (14) zwei Fenster (15) besitzt, die gegenüber der Längsachse der Kappe (14) um einen solchen Betrag versetzt sind, daß jeweils einem Fenster (15) ein geschlossener Wandteil (16) der Kappe (14) gegenüberliegt, so daß zwei senkrecht zur Ebene der Längsachse der Kappe verfahrbare Werkzeugbacken (18) das der Einstellung der Stellschraube (11) dienende Innengewinde (17) in den Wandteilen (16) herzustellen vermögen.

2. Kappe nach Anspruch 1, **dadurch gekennzeichnet, daß** die Kappe (14), in der Draufsicht betrachtet, vollkommen symmetrisch aufgebaut ist.

3. Kappe nach Anspruch 1 oder 2, **gekennzeichnet durch** einen oberhalb des Verstellbereiches der Stellschraube (11) angeordneten Verschlußstopfen (22), der eine **durch** Farbgebung und/oder Zeichen gebildete Kennzeichnung besitzt.

4. Verfahren zur Herstellung einer Kappe nach einem der Ansprüche 1 bis 3, **dadurch gekennzeichnet, daß** die Kappe (14) aus Kunststoff gespritzt wird, wobei das Innengewinde (17) durch zwei senkrecht zur Ebene der Längsachse der Kappe (14) verfahrbare Backen (18) gebildet wird, welche gleichzeitig als Fenster (15) dienende Aussparungen herstellen.

5. Verfahren nach Anspruch 4, **dadurch gekennzeichnet, daß** beim Spritzvorgang in der Kappe (14) gleichzeitig ein Innengewinde für die Befestigung der Kappe (14) auf einer die Spindel (2) umschließenden Spindelmutter (3) geformt wird.

6. Vorrichtung zur Durchführung des Verfahrens nach den Ansprüchen 4 und 5, **gekennzeichnet durch** ein Spritzwerkzeug, welches besteht aus zwei den Mittelkörper der Kappe (14) und die Innengewinde (17) für die Stellschraube (11) formende, horizontal verfahrbare Backen (18, 19), einem vertikal einsetz-und herausnehmbaren Bolzen (20) mit glatter Außenwand, der zusammen mit den Backen (18, 19) den oberhalb der Fenster (15) gelegenen Bereich formt, und einem vertikal einsetzbaren, nach dem Spritzvorgang herausschraubbaren Gewindeteil (21), welches zusammen mit den Backen (18, 19) den unterhalb der Fenster (15) gelegenen Bereich und das zur Befestigung der Kappe (14) dienende Innengewinde bildet.

## Claims

1. Cap for a shut-off fitting, the said cap being arranged on the handwheel of a shut-off fitting equipped with an upwardly moved spindle, the cap surrounding the spindle, which is moved over and beyond the height of the handwheel, and carrying a vertically adjustably arranged stroke limitation which is formed by a setscrew penetrating with its entire axial extent into the cap and rotatable in an internal thread arranged in the cap, the height setting of the spindle being visible via windows arranged laterally in the cap, **characterized in that** the cap (14) possesses two windows (15) which are offset with respect to the longitudinal axis of the cap (14) by an amount such that a closed wall part (16) of the cap (14) is located opposite a window (15) in each case, so that two die jaws (18) movable perpendicularly to the plane of the longitudinal axis of the cap can produce in the wall parts (16) the internal thread (17) which serves for setting the setscrew (11).

2. Cap according to Claim 1, **characterized in that**, as seen in top view, the cap (14) has a completely symmetrical construction.

3. Cap according to Claim 1 or 2, **characterized by** a plug (22) which is arranged above the range of adjustment of the setscrew (11) and which possesses a marking formed by colour and/or by characters.

4. Method for producing a cap according to one of Claims 1 to 3, **characterized in that** the cap (14) is injection-moulded from plastic, the internal thread (17) being formed by two jaws (18) which are movable perpendicularly to the plane of the longitudinal axis of the cap (14) and which simultaneously produce clearances serving as windows (15).

5. Method according to Claim 4, **characterized in that**, during the injection-moulding operation, an internal thread for fastening the cap (14) on a spindle nut (3) surrounding the spindle (2) is simultaneously formed in the cap (14).

6. Device for carrying out the method according to Claim 4 and 5, **characterized by** an injection-moulding die which consists of two horizontally movable jaws (18, 19) forming the middle body of the cap (14) and the internal threads (17) for the setscrew (11), of a vertically insertable and removable bolt (20) which has a smooth outer wall and, together with the jaws (18, 19), forms the region located above the windows (15), and of a vertically insertable threaded part (21) which can be unscrewed after the injection moulding operation and, together with the jaws (18, 19), forms the region located below the windows (15) and the internal thread serving for fastening the cap (14).

## Revendications

1. Calot pour un robinet d'arrêt, qui est disposé sur la roue à main d'un robinet d'arrêt équipé d'une tige montante, le calot entourant la tige déplacée au-delà de la hauteur de la roue à main et portant un limiteur de course disposé de manière réglable en hauteur qui est formé par une vis de réglage plongeant dans le calot avec toute son étendue axiale, pouvant tourner dans un filetage interne prévu dans le calot, le réglage en hauteur de la tige étant visible par le biais de fenêtres prévues latéralement dans le calot, **caractérisé en ce que** le calot (14) possède deux fenêtres (15) qui sont décalées par rapport à l'axe longitudinal du calot (14) d'une mesure telle qu'à chaque fois une fenêtre (15) se trouve en face d'une partie de paroi fermée (16) du calot (14), de sorte que deux mâchoires d'outil (18) déplaçables perpendiculairement au plan de l'axe longitudinal du calot puissent créer le filetage interne (17) dans les parties de paroi (16) servant à ajuster la vis de réglage (11).

2. Calot selon la revendication 1, **caractérisé en ce que** le calot (14), considéré en vue de dessus, est réalisé de manière entièrement symétrique.

3. Calot selon la revendication 1 ou 2, **caractérisé par** un bouchon de fermeture (22) disposé au-dessus de la région de réglage de la vis de réglage (11), lequel possède un marquage caractéristique constitué par une couleur et/ou un symbole.

4. Procédé de fabrication d'un calot selon l'une quelconque des revendications 1 à 3, **caractérisé en ce que** le calot (14) est fabriqué par injection de plastique, le filetage interne (17) étant formé par deux mâchoires (18) déplaçables perpendiculairement au plan de l'axe longitudinal du calot (14), lesquelles créent simultanément les évidements servant de fenêtres (15).

5. Procédé selon la revendication 4, **caractérisé en ce que** lors de l'opération d'injection, un filetage interne pour la fixation du calot (14) sur un écrou de tige (3) entourant la tige (2) est formé simultanément dans le calot (14).

6. Dispositif pour la mise en oeuvre du procédé selon les revendications 4 et 5, **caractérisé par** un outil d'injection qui se compose de deux mâchoires (18, 19) déplaçables horizontalement, formant le corps central du calot (14) et le filetage interne (17) pour la vis de réglage (11), d'un boulon (20) insérable et retirable verticalement avec une paroi extérieure lisse qui forme, conjointement avec les mâchoires (18, 19), la région située au-dessus des fenêtres (15), et une partie filetée (21) pouvant être insérée verticalement et dévissée après l'opération d'injection, qui forme, conjointement avec les mâchoires (18, 19), la région située en dessous des fenêtres (15) et le filetage interne servant à la fixation du calot (14).
